# EUROPÄISCHE PATENTSCHRIFT

(11) **EP 0 717 271 B1**
(45) Veröffentlichungstag und Bekanntmachung des Hinweises auf die Patenterteilung: **08.08.2001**
(21) Anmeldenummer: 95105851.0
(22) Anmeldetag: 19.04.1995
(51) Int. Cl.: G01G 3/14, G01G 19/02

(54) **Wägezellenanordnung**
Load cell system
Système de capteur de pesage

(30) Priorität: 13.12.1994 DE 9419696 U
(43) Veröffentlichungstag der Anmeldung: 19.06.1996
(73) Patentinhaber: Hottinger Baldwin Messtechnik GmbH, 64293 Darmstadt (DE)
(72) Erfinder: Will, Ronald, D-64665 Alsbach (DE); Franz, Markus, D-64380 Rossdorf (DE); Wägner, Ralf, D-65468 Trebur (DE); Gerlach, Hans-Joachim, D-64739 Höchst (DE); Schlachter, Werner, D-64287 Darmstadt (DE)
(74) Vertreter: Behrens, Helmut, Dipl.-Ing.

(56) Entgegenhaltungen:
- WO-A-84/02188
- FR-A- 2 208 521
- US-A- 2 901 235
- US-A- 3 407 891
- US-A- 4 955 441

## Beschreibung

Die Erfindung betrifft eine Wägezellenanordnung mit einer Pendelstützen-Wägezelle, mit zumindest einem einem Ende der Pendelstütze zugeordneten Abstützelement und mit einer Einrichtung, die einander zugeordnete Elemente an Pendelstütze und Abstützelement umfaßt, um die Drehung der Pendelstütze um ihre Achse zu begrenzen.

Wägezellenanordnungen dieser Art werden unter anderem bei Wägeeinrichtungen, Plattformwaagen und insbesondere bei Wägebrücken zur Wägung von Fahrzeugen eingesetzt. Mehrere Wägezellenanordnungen mit jeweils einer Pendelstützen-Wägezelle sind dabei zwischen der Wägebrücke und einem Fundament angeordnet. Die Wägebrücke ist innerhalb zugelassener Grenzen horizontal beweglich, so daß bei diesen Bewegungen die Wägezellen Pendelbewegungen ausführen, die im allgemeinen einen Winkelbereich von 10 Grad nicht überschreiten. Die Wägezellen sind somit sowohl vertikalen als auch dazu transversalen Kräften ausgesetzt. Dies kann dazu führen, daß den Wägezellen unerwünschte Drehbewegungen um ihre Achse aufgezwungen werden, die unter Umständen bis zum Abreißen der Verkabelung führen können.

Bei der Wägezellenanordnung nach der US-Patentschrift 2,901,235 wird eine Drehbewegung der Pendelstütze um ihre Achse dadurch begrenzt, daß eine nahe dem Pendelstützenende befestigte achsparallel sich erstreckende Lasche einer radial in das Abstützelement eingeschraubten Schraube derart zugeordnet wird, daß die Schraube einen langen Schlitz in der Lasche mit Spiel durchgreift. In einer weiteren Ausführungsform der bekannten Wägezellenanordnung ist ein glockenförmiges Teil am Ende der Pendelstütze vorgesehen, das die Abstützstelle überwölbt und das vier über den Umfang verteilte und vom Rand des glockenförmigen Teils sich erstreckende Umfangsausnehmungen aufweist. Am Stützelement sind vier über den Umfang verteilte radial sich erstreckende Stege vorgesehen, die mit allseitigem Abstand in die Umfangsausnehmung ragen, so daß eine Drehbewegung der Pendelstütze um ihre Achse begrenzt wird. Eine Pendelbewegung der Pendelstütze ist bei derartigen Anordnungen in den durch den Abstand zwischen Schraube und Schlitz bzw. zwischen Stegen und Ausnehmungen gesetzten Grenzen möglich.

Aus der EP-Patentschrift 0 419 784 ist eine Wägezellenanordnung bekannt, bei der ein Ende der Pendelstütze nichtkreisförmige Gestalt aufweist, wobei dieser Endbereich darüberhinaus in Form eines Segments eines geraden Zylinders ausgebildet ist. Dieser Endbereich ist in einer entsprechend ausgebildeten Ausnehmung des Abstützelementes angeordnet. Weiter ist offenbart, ein Ende der Pendelstütze mit quer verlaufenden stiftförmigen Fortsätzen zu versehen, die in entsprechende Ausnehmungen des Abstützelementes eingreifen. Darüberhinaus sind in dieser US-Patentschrift Wägezellenanordnungen offenbart, bei denen das die Pendelstütze umschließende Gehäuse Fortsätze aufweist, die zwischen zwei fest zur Abstützung angeordneten Stegen angeordnet sind.

Die bekannten Einrichtungen zur Begrenzung der Drehbewegung von Pendelstützen-Wägezellen sind kompliziert und aufwendig in der Bauweise.

Der Erfindung liegt daher die Aufgabe zugrunde, eine Wägezellenanordnung mit einer Drehbegrenzungseinrichtung zu schaffen, die kompakt und einfach aufgebaut und kostengünstig ist.

Erfindungsgemäß wird diese Aufgabe mit dem Merkmal des Patentanspruchs 1 oder des Patentanspruchs 3 gelöst. In äußerst einfacher Weise ist die Pendelstütze an ihrem Endbereich mit einem Kragen versehen, der eine Ausnehmung mit Anschlagflächen aufweist, die mit einem fest am Abstützelement angeordneten Element zusammenwirken. Der Kragen kann sehr einfach als gestanztes oder brenngeschnittenes Blechteil hergestellt werden und beispeilsweise durch Schweißen oder Löten mit dem Pendelstützenende verbunden sein. In einer bevorzugten Ausgestaltung kann der Kragen ringförmig ausgebildet sein und als Drehteil hergestellt werden. Die Ausnehmungen können dabei vor dem Abstechen des Ringes oder auch am fertigen Ringteil angebracht werden.

Das stiftförmige, achsparallel am Abstützelement befestigte Element ist dicht neben der Abstützfläche für das Ende der Pendelstütze angeordnet. Dadurch ergibt sich eine Anordnung, bei der in vorteilhafter Weise das die Pendelstütze umgebende Gehäuse, das Abstützelement und der zwischen Gehäuse und Abstützelement am Endebereich der Pendelstütze befestigte Kragen gleichen Durchmesser aufweisen, also eine äußerst kompakt und einfach aufgebaute Wägezellenanordnung. In einer vorteilhaften Ausgestaltung läßt sich auf dem Außendurchmesser von Abstützelement und Gehäuse ein Faltenbalg anbringen, der die Abstützstelle und die Drehbegrenzungseinrichtung dichtend umschließt.

Im folgenden wird die Erfindung anhand der Zeichnung der erfindungsgemäßen Wägezellenanordnungen im einzelnen erläutert. Es zeigen:
Fig. 1 eine Wägezellenanordnung im Schnitt,
Fig. 2 einen Schnitt längs der Linie II-II in Fig. 1
Fig. 3 einen Teilschnitt ähnlich Fig. 2

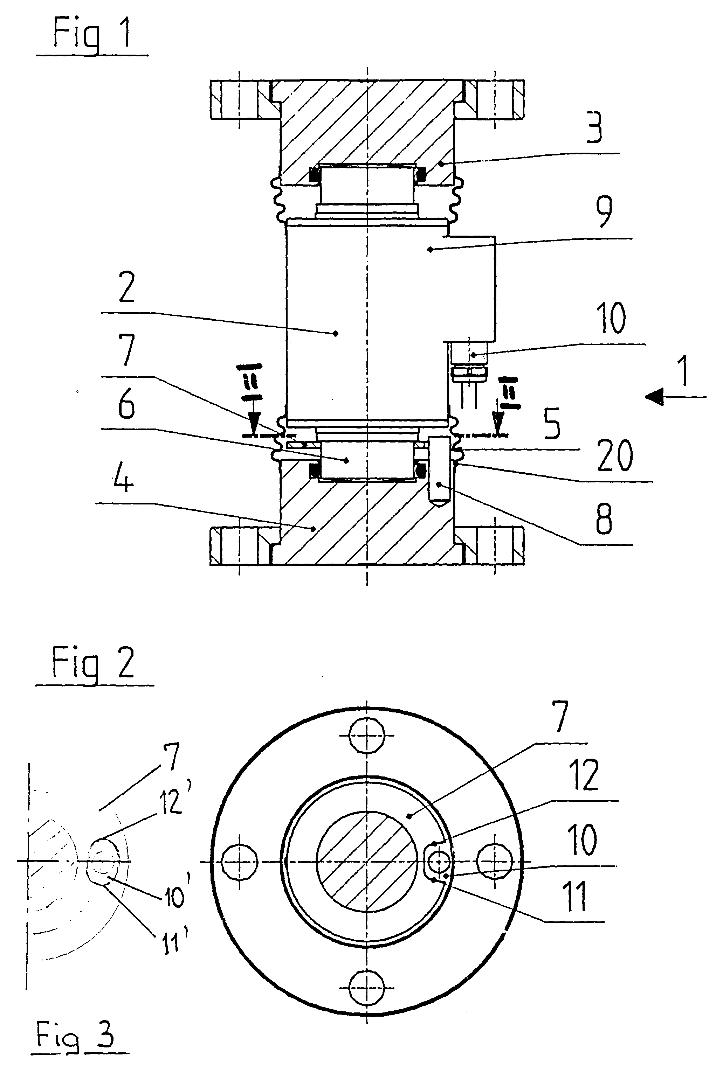

Die in Fig. 1 dargestellte Wägezellenanordnung 1 umfaßt eine Pendelstützen-Wägezelle 2 und ein oberes und unteres Abstützelement 3,4 sowie eine Drehbegrenzungseinrichtung 5 mit einem ersten, an der Pendelstützen-Wägezelle befestigten Element 7 und einem zweiten in dem dargestellten Ausführungsbeispiel an dem unteren Abstützelement 4 befestigten Element 8.

Die Pendelstützen-Wägezelle 2 weist eine Pendelstütze 6 und ein die Pendelstütze 6 dicht umschließendes Gehäuse 9 auf. Die Pendelstütze 6 ist in nicht dargestellter Weise mit Dehnungsmeßstreifen zur Erfassung von lastabhängigen Verformungen aufgrund der zu wägenden Last versehen. Die Dehnungsmeßstreifen sind mit einer im Gehäuse 9 untergebrachten Signalverarbeitungsschaltung verbunden, die ihrerseits mit einer Anschlußeinheit 10 für eine Auswertungseinrichtung versehen ist.

Die beiden Endbereiche der Pendelstütze 6 sind sphärisch ausgebildet und abgedichtet in Vertiefungen der Abstützelemente 3 und 4 abgestützt. In bekannter Weise kann durch geeignete Wahl der Radien der sphärischen Endkuppen die Pendelstütze 6 z. B. selbstaufrichtend oder nicht selbstaufrichtend ausgelegt werden, wie dies z. B. in der EP 0 315 846 A1 näher beschrieben ist.

Die Drehbegrenzungseinrichtung 5 umfaßt das an der Pendelstütze 6 befestigte, als Kragen ausgebildete und sich in einer Querschnittsebene erstreckende Element 7, das am Außendurchmesser eine Umfangsausnehmung 10 mit Anschlagflächen 11 und 12 aufweist. Die Anschlagflächen 11 und 12 verlaufen annähernd radial nach außen. Das Element 7 ist durch Ausstanzen aus einem Blech gefertigt und durch z. B. Schweißen an der Pendelstütze 6 befestigt. In Fig. 3 dargestellt ist eine Ausführungsform, bei der statt der Umfangsausnehmung 10 eine sich längs eines Kreislinienabschnitts erstreckende langlochförmige Ausnehmung 10' vorgesehen ist, wobei sich die Anschlagflächen 11',12' an den Enden der langlochförmigen Ausnehmung 10' befinden.

Die Drehbegrenzungseinrichtung 5 umfaßt weiter das am Abstützelement 4 befestigte, stiftförmige, achsparallel zur Pendelstützenachse sich erstreckende Element 8. Das Element 8 ist im dargestellten Beispiel ein in eine Sackbohrung des Abstützelementes 4 eingesetzter Zylinderstift.

Die Länge des stiftförmigen Elementes 8 und die Lage des Kragens auf dem Endbereich der Pendelstütze 6 sind so gewählt, daß auch bei maximaler Neigung der Pendelstütze 6 der Kragen einerseits in Eingriff mit dem stiftförmigen Element 8 bleibt und andererseits nicht in Berührung mit der Stirnfläche des Abstützelementes 4 kommt. Ebenso kommt das stiftförmige Element 8 nicht in Berührung mit der Stirnfläche des Gehäuses 9. Die Umfangsausnehmung 10 bzw. die langlochförmige Ausnehmung 10' umgibt das stiftförmige Element 8 mit einem derartigen Spiel, daß eine Neigung der Pendelstütze 6 im Raum, d. h. eine Neigung mit der Pendelstützenachse auf einem Kegelmantel um die Abstützstelle im Abstützelement 4 ohne Behinderung durch Kontakt zwischen dem Kragen und dem stiftförmigen Element 8 möglich ist. Eine derartige Pendelbewegung im Raum weist einen Winkel unter 10 Grad auf.

Die Drehbewegungseinrichtung 5 kann selbstverständlich statt am unteren Endbereich der Pendelstütze 6 an derem oberen Endbereich vorgesehen werden und wirkt dann mit dem oberen Abstützelement 3 zusammen.

Um die Drehbegrenzungseinrichtung 5 und die Abstützstellen vor Verschmutzung etc. zu schützen, ist im dargestellten Ausführungsbeispiel ein elastischer Faltenbalg 20 vorgesehen, der mit seinen Enden einerseits auf dem Abstützelement 4 und andererseits auf dem Gehäuse 9 der Pendelstütze 6 aufgezogen ist.

Die erfindungsgemäße Wägezellenanordnung kann z. B. in Plattformwaagen oder Wägebrücken zur Wägung von Fahrzeugen oder bei der Behälterwägung eingesetzt werden; Einsatzmöglichkeiten sind in der Broschüre "Einbau von Wägezellen" der Fa. Hottinger Baldwin Messtechnik GmbH im einzelnen dargestellt und beschrieben.

## Patentansprüche

1. Wägezellenanordnung (1) mit einer Pendelstützen-Wägezelle (2), mit zumindest einem einem Ende der Pendelstütze (6) zugeordneten Abstützelement (3 oder 4) und mit einer Einrichtung (5), die einander zugeordnete Drehbegrenzungs-Elemente (7,8) an Pendelstütze (6) und Abstützelement (3 oder 4) umfaßt, dadurch gekennzeichnet, daß das an der Pendelstütze (6) angeordnete Element (7) ein in einer Querschnittsebene nahe der Abstützfläche sich erstreckender Kragen mit Anschlagflächen (11,12) an einer Umfangsausnehmung (10) ist, der gegen das am Abstützelement (3 oder 4) befestigte, achsparallel angeordnete und in die Umfangsausnehmung (10) ragende, stiftförmige Element (8) anschlagbar ist.

2. Wägezellenanordnung nach Anspruch 1, dadurch gekennzeichnet, daß der Kragen kreisringförmig ist und die Umfangsausnehmung (10) annähernd radial sich erstreckende Anschlagflächen (11,12) aufweist.

3. Wägezellenanordnung (1) mit einer Pendelstützen-Wägezelle (2), mit zumindest einem einem Ende der Pendelstütze (6) zugeordneten Abstützelement (3 oder 4) und mit einer Einrichtung (5), die einander zugeordnete Drehbegrenzungs-Elemente (7,8) an Pendelstütze (6) und Abstützelement (3 oder 4) umfaßt, dadurch gekennzeichnet, daß das an der Pendelstütze (6) angeordnete Element (7) ein in einer Querschnittebene nahe der Abstützfläche sich erstreckender Kragen mit Anschlagflächen (11',12') an den Enden einer langlochförmigen Ausnehmung (10'), die sich vorzugweise längs eines Kreislinienabschnitts erstreckt, ist, der gegen das am Abstützelement (3 oder 4) befestigte, achsparallel angeordnete und in die Ausnehmung (10') ragende, stiftförmige Element (8) anschlagbar ist.

4. Wägezellenanordnung nach einem oder mehreren der vorhergehenden Ansprüche, dadurch gekennzeichnet, daß das stiftförmige Element (8) ein in einer Bohrung des Abstützelementes (3 oder 4) angeordneter Zylinderstift oder eine Spannhülse ist.

5. Wägezellenanordnung nach einem oder mehreren der vorhergehenden Ansprüche, dadurch gekennzeichnet, daß die dem Kragen benachbarten Bereiche von Abstützelement (3 oder 4) und Gehäuse der Pendelstützen-Wägezelle (2) etwa gleichen Durchmesser aufweisen.

6. Wägezellenanordnung nach Anspruch 1 oder Anspruch 5, dadurch gekennzeichnet, daß ein den Kragen und das stiftförmige Element (8) umschließender elastischer Abdichtkörper (20) vorgesehen ist.

7. Wägezellenanordnung nach Anspruch 6, dadurch gekennzeichnet, daß der elastische Abdichtkörper (20) ein Faltenbalg ist.

## Claims

1. Load cell arrangement (1) with an articulated support load cell (2), with at least one support element (3 or 4), which is associated with one end of the articulated support (6), and with a device (5) comprising rotation limiting elements (7, 8), associated with one another, at the articulated support (6) and the support element (3 or 4), characterised in that the element (7) disposed on the articulated support (6) is a collar which extends in a cross-sectional plane near the support face, has stop faces (11, 12) at a peripheral recess (10) and can strike against the pin-shaped element (8), which is secured to the support element (3 or 4), disposed paraxially and projects into the peripheral recess (10).

2. Load cell arrangement according to Claim 1, characterised in that the collar is shaped like a circular ring and the peripheral recess (10) comprises stop faces (11, 12) extending approximately radially.

3. Load cell arrangement (1) with an articulated support load cell (2), with at least one support element (3 or 4), which is associated with one end of the articulated support (6), and with a device (5) comprising -rotation limiting elements (7, 8), associated with one another, on the articulated support (6) and the support element (3 or 4), characterised in that the element (7) disposed on the articulated support (6) is a collar which extends in a cross-sectional plane near the support face and has stop faces (11', 12') at the ends of a slot-shaped recess (10'), which preferably extends along a portion of a circular line, which collar can strike against the pin-shaped element (8), which is secured to the support element (3 or 4), disposed paraxially and projects into the recess (10').

4. Load cell arrangement according to one or more of the preceding Claims, characterised in that the pin-shaped element (8) is a cylindrical pin, which is disposed in a hole in the support element (3 or 4), or a clamping sleeve.

5. Load cell arrangement according to one or more of the preceding Claims, characterised in that the regions of the support element (3 or 4) which are adjacent to the collar and the housing of the articulated support load cell (2) are of approximately the same diameter.

6. Load cell arrangement according to Claim 1 or Claim 5, characterised in that there is provided an elastic sealing body enclosing the collar and the pin-shaped element (8).

7. Load cell arrangement according to Claim 6, characterised in that the elastic sealing body (20) is a bellows.

## Revendications

1. Système de capteur de pesage (1) comportant un capteur de pesée (2) à support pendulaire, comportant au moins un élément d'appui (3 ou 4), affecté à une extrémité du support pendulaire (6) et comportant un dispositif (5) qui comprend des éléments (7, 8) de limitation de la rotation, associés les uns aux autres, sur le support pendulaire (6) et l'élément d'appui (3 ou 4), caractérisé en ce que l'élément (7) disposé sur le support pendulaire (6) est une collerette qui s'étend dans un plan de coupe transversal à proximité de la surface d'appui, avec des surfaces de butée (11, 12), sur un évidement périphérique (10), laquelle collerette peut être fixée contre l'élément (8) en forme de broche, fixé à l'élément d'appui (3 ou 4), disposé parallèlement à l'axe et s'engageant dans l'évidement (10).

2. Système de capteur de pesage selon la revendication 1, caractérisé en ce que la collerette a la forme d'un anneau circulaire et l'évidement périphérique (10) présente des surfaces de butée (11, 12) s'étendant approximativement radialement.

3. Système de capteur de pesage (1) comportant un capteur de pesée (2) à support pendulaire, comportant au moins un élément d'appui (3 ou 4), affecté à une extrémité du support pendulaire (6) et comportant un dispositif (5) qui comprend des éléments (7, 8) de limitation de la rotation, associés les uns aux autres sur le support pendulaire (6) et l'élément d'appui (3 ou 4), caractérisé en ce que l'élément (7) disposé sur le support pendulaire (6) est une collerette qui s'étend dans un plan de coupe transversal à proximité de la surface d'appui, avec des surfaces de butée (11', 12') aux extrémités d'un évidement (10') en forme de trou oblong qui s'étend de préférence le long d'un segment de ligne circulaire, laquelle collerette peut être fixée contre l'élément (8) en forme de broche, fixé à l'élément d'appui (3 ou 4), disposé parallèlement a l'axe et s'engageant dans l'évidement (10').

4. Système de capteur de pesage selon une ou plusieurs des revendications précédentes, caractérisé en ce que l'élément (8) en forme de broche est une broche cylindrique disposée dans un perçage de l'élément d'appui (3 ou 4), ou une douille de serrage.

5. Système de capteur de pesage selon une ou plusieurs des revendications précédentes, caractérisé en ce que les zones de l'élément d'appui (3 ou 4), voisines de la collerette, et le boîtier du capteur de pesée (2) à support pendulaire présentent à peu près le même diamètre.

6. Système de capteur de pesage selon la revendication 1 ou la revendication 5, caractérisé en ce qu'il est prévu un corps d'étanchéité (20) élastique, qui entoure la collerette et l'élément (8) en forme de broche.

7. Système de capteur de pesage selon la revendication 6, caractérisé en ce que le corps d'étanchéité (20) élastique est un soufflet.
